# EUROPÄISCHE PATENTSCHRIFT

(11) **EP 2 874 854 B1**
(45) Veröffentlichungstag und Bekanntmachung des Hinweises auf die Patenterteilung: **26.02.2020**
(21) Anmeldenummer: 13732488.5
(22) Anmeldetag: 27.06.2013
(51) Int. Cl.: B60R 25/20, B60R 25/25

(54) **VERFAHREN ZUR AUTHENTIFIZIERUNG EINES FAHRERS IN EINEM KRAFTFAHRZEUG**
METHOD FOR AUTHENTICATING A DRIVER IN A MOTOR VEHICLE
PROCÉDÉ POUR L'AUTHENTIFICATION D'UN CONDUCTEUR DANS UN VÉHICULE AUTOMOBILE

(30) Priorität: 18.07.2012 DE 102012106522
(43) Veröffentlichungstag der Anmeldung: 27.05.2015
(73) Patentinhaber: Huf Hülsbeck & Fürst GmbH & Co. KG, 42551 Velbert (DE)
(72) Erfinder: GENNERMANN, Sven, 42551 Velbert (DE)
(74) Vertreter: Vogel, Andreas
(86) Internationale Anmeldenummer: PCT/EP2013/063542
(87) Internationale Veröffentlichungsnummer: WO 2014/012762

(56) Entgegenhaltungen:
- EP-A1- 2 295 298
- DE-B3- 10 339 476
- US-A1- 2002 135 466
- US-B1- 6 400 835
- US-B1- 6 727 800

## Beschreibung

Die Erfindung betrifft ein Verfahren zur Authentifizierung eines Fahrers in einem Kraftfahrzeug. Zudem bezieht sich die Erfindung auf ein System, das mit dem zuvor genannten Verfahren betreibbar ist.

Aus dem Stand der Technik ist es bekannt, Schutzmechanismen gegen Autodiebstahl zu verbessern bzw. Vorrichtungen zu entwickeln, die es lediglich erlauben, dass eine berechtigte Person ein Kraftfahrzeug fahren, insbesondere starten kann. Es existieren viele Arten von Sicherheitsvorrichtungen, die einem Fahrer das Starten eines Kraftfahrzeuges nur nach Authentifizierung der biologischen Informationen des Fahrers gestatten. Die DE 60 2006 000 078 T2 bedient sich einer biometrischen Authentifizierung, wobei die Überprüfung der erfassten biometrischen Daten des Fahrers über eine Kraftfahrzeugsteuerung erfolgt. Ein wesentlicher Nachteil dieses Standes der Technik ist, dass jedes Kraftfahrzeug mit einer derartigen Überprüfungseinheit ausgestattet werden muss. Ebenfalls ergibt sich die Gefahr, dass am Kraftfahrzeug während der Überprüfung der biometrischen Daten Manipulationen denkbar sind. Die EP2295298A zeigt ein System zur Authentifizierung eines Fahrers nach dem Oberbegriff des Anspruchs 9.

Die Aufgabe der vorliegenden Erfindung ist es, die soeben genannten Nachteile zu vermeiden, insbesondere ein effizientes Verfahren zur Authentifizierung eines Fahrers in einem Kraftfahrzeug zu schaffen, wobei gleichzeitig eine zuverlässige Funktionsweise gewährleistet ist.

Die genannte Aufgabe wird durch ein Verfahren mit sämtlichen Merkmalen des Patentanspruches 1 gelöst. Vorteilhafte Ausgestaltungen der Erfindung sind in den abhängigen Ansprüchen angegeben. Zudem wird die Erfindung durch ein System mit sämtlichen Merkmalen des Anspruches 9 gelöst.

Erfindungsgemäß wird ein Verfahren zur Authentifizierung eines Fahrers in einem Kraftfahrzeug vorgeschlagen, mit einer im Kraftfahrzeug angeordneten Erkennungsvorrichtung zur Erfassung von Istdaten des Fahrers, die während der Authentifizierung zu einer Überprüfungsvorrichtung, die in einer externen Station außerhalb des Kraftfahrzeuges angeordnet ist, gesendet werden, wobei die Überprüfungsvorrichtung die Istdaten mit Solldaten vergleicht und bei einer Übereinstimmung der Istdaten mit den Solldaten ein Freigabesignal von der externen Station zum Kraftfahrzeug gesendet wird, wodurch ein Startvorgang des Kraftfahrzeuges für den Fahrer ermöglicht wird.

Ein wesentlicher Kern der Erfindung ist es, dass innerhalb des Kraftfahrzeuges Istdaten des Fahrers über die Erkennungsvorrichtung erfasst werden. Das bedeutet, dass die Ermittlung der Istdaten des Fahrers erst dann erfolgt, wenn der Fahrer sich im Kraftfahrzeug befindet, insbesondere auf dem Fahrersitz des Kraftfahrzeuges sitzt. Nach einer Erfassung dieser Istdaten erfolgt ein weiterer Schritt des erfindungsgemäßen Verfahrens und zwar dass diese erfassten Istdaten zu einer externen Station übermittelt werden, wobei diese externe Station außerhalb des Kraftfahrzeuges sich befindet. Die zur Erkennungsvorrichtung des Kraftfahrzeuges beabstandete externe Station weist eine Überprüfungsvorrichtung auf, die die Istdaten mit zuvor gespeicherten Solldaten des Fahrers vergleicht. Stimmen die Istdaten mit den Solldaten überein, wird ein Freigabesignal von der externen Station zum Kraftfahrzeug gesendet, das dieses Freigabesignal empfängt, wodurch ein Startvorgang des Kraftfahrzeuges für den Fahrer ermöglicht wird. Ohne Freigabesignal kann der Fahrer innerhalb des Kraftfahrzeuges einen Startvorgang nicht starten, da dieser blockiert oder deaktiviert ist. Erst bei einer positiven Authentifizierung, d. h. bei einer Übereinstimmung der Istdaten mit den Solldaten ist der Startvorgang freigegeben. Vorteilhafterweise sind die Istdaten biometrische Istdaten des Fahrers.

Vorteilhafterweise können die Solldaten vor der Authentifizierung in die externe Station eingelesen werden, insbesondere ist eine Einlesevorrichtung vorgesehen, die außerhalb des Kraftfahrzeuges Solldaten des Fahrers erfasst, die z. B. in der externen Station gespeichert werden. Die Einlesevorrichtung kann z. B. eine Kamera sein, die Bilddaten der berechtigten Person, die das Kraftfahrzeug starten möchte, erfasst. Die Einlesevorrichtung kann in einer weiteren Ausführungsform derart ausgeführt sein, dass visuell und/oder optisch definierte biometrische Charakteristika des Fahrers erfasst und als Solldaten gespeichert werden.

Ebenfalls ist es denkbar, dass eine Einlesevorrichtung außerhalb des Kraftfahrzeuges vorgesehen ist, die Solldaten des Fahrers erfasst. Diese Einlesevorrichtung steht mit der externen Station in Kommunikation, wobei die externe Station die Überprüfungsvorrichtung aufweist, die dafür zuständig ist, die eingelesenen Solldaten mit den Istdaten zu vergleichen.

Die Erfindung umfasst des Weiteren die Möglichkeit, dass neben den biometrischen Solldaten in der externen Station weitere Informationen hinterlegbar sind, die einen möglichen Startvorgang des Kraftfahrzeuges begrenzen bzw. limitieren können. Das bedeutet, dass einer Person ein definiertes Zeitfenster, z. B. ein definierter Tag, Monat oder Stunden, etc. bereitgestellt wird, um einen positiven Startvorgang des Kraftfahrzeuges auszulösen.

Ferner ist es denkbar, dass so lange keine Übereinstimmung der Daten vorliegt, das Kraftfahrzeug sich in einem Sicherungsmodus befindet, in dem ein Starten des Kraftfahrzeuges gesperrt ist, wobei bei einer Übereinstimmung der Daten das Kraftfahrzeug sich in einem Startmodus befindet. Zum Beispiel kann die Zündungssteuerung des Kraftfahrzeuges im Sicherungsmodus deaktiviert sein, um einer nicht authentifizierten Person das Starten des Kraftfahrzeuges nicht zu gestatten. Erst bei einer Übereinstimmung der Daten erfolgt ein Moduswechsel des Kraftfahrzeuges, und zwar vom Sicherungsmodus in den Startmodus. Über eine entsprechende Aktion des Fahrers, beispielsweise durch ein Einführen und/oder Drehen des Zündschlüssels innerhalb des im Kraftfahrzeug vorgesehenen Kraftfahrzeugschlosses, erfolgt die Zündung des Kraftfahrzeugmotors. Ebenfalls ist es denkbar, dass ein Start-/Stoppschalter zur Aktivierung der Zündung des Kraftfahrzeugmotors vorgesehen ist.

In einer weiteren die Erfindung verbessernden Maßnahme kann vorgesehen sein, dass in der externen Station, insbesondere in der Überprüfungsvorrichtung ablesbar ist, inwieweit das Kraftfahrzeug sich in einem Sicherungsmodus oder in einem Startmodus befindet.

Ebenfalls kann das erfindungsgemäße Verfahren in einem Start-/Stopp-System eines Kraftfahrzeuges integriert sein, das ein automatisch arbeitendes System zur Reduzierung des Kraftstoffverbrauches in Standphasen, z. B. bei einem Ampelstopp, von Kraftfahrzeugen ist. Das Start-/Stopp-System arbeitet mit einer automatischen Motorabschaltung. Das erfindungsgemäße Verfahren kann z. B. derart in einem Start-/Stopp-System integriert sein, das im Falle einer automatischen Motorabschaltung und einem anschließenden automatischen Motorstart eine Authentifizierung des Fahrers gemäß des Erfindungsgedankens ausbleibt, wenn zuvor eine positive Authentifizierung stattgefunden hat.

Erfindungsgemäß kann das Verfahren eine Steuerung umfassen, die ausgehend von zumindest einer definierten Aktion des Fahrers die Authentifizierung startet. Das bedeutet, dass der Fahrer eine Handlung bewusst oder unbewusst vornehmen muss, damit die Authentifizierung gestartet wird. Diese definierte Aktion kann z. B. eine Betätigung der Kupplung, des Blinkers, eine Berührung des Lenkrades, insbesondere an einer definierten Stelle, das Einnehmen der Sitzposition auf dem Fahrersitz, eine bewusste Aktivierung eines Schalters, einer Fläche, eines Knopfes, die Betätigung der Hupe, etc. sein. Zweckmäßigerweise startet die Authentifizierung bei einer bewussten Aktivierung eines innerhalb des Kraftfahrzeuges angeordneten Zündschalters und/oder Start-/Stopp-Schalters.

Des Weiteren kann es sinnvoll sein, dass die Erkennungsvorrichtung bei der Authentifizierung biologische Informationen des Fahrers als Istdaten erfasst, wobei die Istdaten zumindest eine der folgenden biologischen Informationen umfassen: Körpergröße, Iris, Retina, Gesichtsgeometrie, Fingerabdruck, Handlinienstruktur, Handvenenstruktur, Handgeometrie, Nagelbettmuster, Ohrform, Stimme, Unterschrift, Bewegungsmusterverhalten für zumindest eine definierte Bewegung des Fahrers, Lippenbewegung, Körpergeruch, DNA-Überprüfung. Über die biometrische Überprüfung lässt sich eine hohe Sicherheit und eine hohe Zuverlässigkeit bei der Authentifizierung des Fahrers erzielen. Eine Kombination von zumindest zwei biometrischen Charakteristika für einen zuverlässigen Authentifizierungsprozess ist ebenfalls denkbar, z. B. die Kombination einer Gesichtserkennung mit einem Fingerabdruck. Die Gesichtserkennung kann z. B. über eine Kamera erfolgen. Die Fingerabdruckerkennung kann z. B. über Halbleiterfingerprintsensoren durchgeführt werden. Beispielsweise sind Streifensensoren denkbar, über diese der jeweilige Finger zu bewegen ist.

Das erfindungsgemäße Verfahren schließt ebenfalls mit ein, dass die Erkennungsvorrichtung so lange deaktiviert bleibt, bis die externe Station ein entsprechendes Wecksignal zum Kraftfahrzeug sendet. Das bedeutet, dass aus der externen Station bestimmt werden kann, welches Kraftfahrzeug zu welchem Zeitpunkt überhaupt gestartet werden kann.

Vorteilhafterweise kann erst eine Authentifizierung starten, wenn eine zweite definierte Aktion des Fahrers vorliegt, insbesondere die zweite definierte Aktion durch einen kraftfahrzeugseitigen Sensor erkannt wird. Die zweite definierte Aktion kann z. B. eine Betätigung der Kupplung, des Blinkers, eine Berührung des Lenkrades, insbesondere an einer definierten Stelle, das Einnehmen der Sitzposition auf dem Fahrersitz, eine bewusste Aktivierung eines Schalters, einer Fläche, eines Knopfes, die Betätigung der Hupe, etc. sein. Über die Verwendung der zweiten definierten Aktion des Fahrers kann eine erhöhte Sicherheit und Zuverlässigkeit des Verfahrens geschaffen werden. Beispielsweise ist es denkbar, dass der Sensor ein Sitzsensor oder einen Türsensor oder ein Pedalsensor oder ein Ganghebelsensor oder ein Sensor zur Erkennung eines mobilen Identifikationsgebers, den der Benutzer bei sich trägt, ausgebildet ist. Ebenfalls kann vorgesehen sein, dass der Sensor ein Sicherheitsgurtsensor ist. Das bedeutet, dass erst, wenn der Fahrer auf dem Fahrersitz sitzt oder die Fahrertür geschlossen ist oder ein entsprechendes Pedal betätigt ist oder der Ganghebel eine definierte Stellung hat bzw. in eine definierte Stellung gebracht worden ist oder der Sicherheitsgurt vorschriftsmäßig angelegt worden ist, der Authentifizierungsvorgang über die erste definierte Aktion des Fahrers, insbesondere über die Betätigung des Zündschalters und/oder des Start-/Stopp-Schalters gestartet werden kann. Ebenfalls kann vorgesehen sein, dass zunächst eine Identifizierungsüberprüfung zwischen dem mobilen Identifikationsgeber, den der Kraftfahrzeughalter bzw. Fahrer bei sich trägt, und dem Kraftfahrzeug erfolgt, wobei bei einer positiven Identifikationsüberprüfung die bereits genannte erste definierte Aktion des Fahrers einen Startvorgang der Authentifizierung auslösen kann.

Vorteilhafterweise kann die Erkennungsvorrichtung eine Kamera zur Erfassung der Istdaten aufweisen. Zum Beispiel kann die Kamera eine CCD-Kamera sein, die auch Körperbewegungen oder-haltungen des Fahrers aufnehmen und erfassen kann.

Des Weiteren wird die Aufgabe durch ein System zur Authentifizierung eines Fahrers in einem Kraftfahrzeug gelöst, mit einer im Kraftfahrzeug angeordneten Erkennungsvorrichtung zur Erfassung von Istdaten des Fahrers, die während der Authentifizierung zu einer Überprüfungsvorrichtung, die in einer externen Station außerhalb des Kraftfahrzeuges angeordnet ist, gesendet werden, wobei die Überprüfungsvorrichtung die Istdaten mit Solldaten vergleicht und bei einer Übereinstimmung der Istdaten mit den Solldaten ein Freigabesignal von der externen Station zum Kraftfahrzeug gesendet wird, wodurch ein Startvorgang des Kraftfahrzeuges für den Fahrer ermöglicht wird. Die Erkennungsvorrichtung kann als elektronische Box innerhalb des Kraftfahrzeuges angeordnet sein. Zudem ist das Kraftfahrzeug bzgl. dieser Box nachrüstbar. Besonders vorteilhaft kann dieses System für Mietwagenagenturen, Flottenfahrzeuge von Firmen oder sogar für Versicherungen sein, für die die Information wichtig ist, wer und/oder wie oft das Kraftfahrzeug von einer jeweiligen Person betrieben wird bzw. gefahren wird. Insbesondere bei der Versicherungsprämie für ein jeweiliges Fahrzeug könnte erfindungsgemäß vorgesehen sein, dass das System individuell der externen Station mitteilt, wie oft welcher Fahrer das jeweilige Fahrzeug gefahren hat.

Vorteilhafte Ausgestaltungen des Systems sind in den abhängigen Ansprüchen 12 bis 17 angegeben.

Vorteilhaft kann das Kraftfahrzeug Kommunikationsmittel aufweisen, um Istdaten sowie ein Freigabesignal zu versenden und/oder zu empfangen, wobei die externe Station ein Kommunikationsmittel aufweist, um Istdaten sowie ein Freigabesignal zu empfangen und/oder zu versenden. Das Kommunikationsmittel des Kraftfahrzeuges sowie das Kommunikationsmittel der externen Station kann als eine Sende- und/oder Empfangseinrichtung ausgebildet sein. Die Kommunikation zwischen den Kommunikationsmitteln kann vorteilhafterweise verschlüsselt erfolgen. Das Kommunikationsmittel des Kraftfahrzeuges kann in der Erkennungsvorrichtung integriert sein.

Vorteilhafterweise sind die Istdaten biometrische Istdaten des potentiellen Fahrers.

Des Weiteren besteht eine Möglichkeit darin, die Steuerung in der Erkennungsvorrichtung zu integrieren, wobei die Steuerung mit einer Motorsteuerung in Signalverbindung bringbar ist. Die Steuerung entscheidet unter Anderem, wann die Authentifizierung startet. Hierbei ist es denkbar, dass ausgehend von zumindest einer ersten definierten Aktion des Fahrers die Authentifizierung startet. Ebenfalls ist es denkbar, dass zumindest zwei definierte Aktionen des Fahrers notwendig sind, damit die Authentifizierung startet. Dieses erkennt die Steuerung, die in einem weiteren Ausführungsbeispiel auch außerhalb der Erkennungsvorrichtung angeordnet sein kann, insbesondere in der Motorsteuerung des Kraftfahrzeuges integriert ist.

Erfindungsgemäß ergibt sich die weitere Möglichkeit, dass die externe Station mit einer Datenbank und/oder einem Speicher in Verbindung steht, in der/in dem die Solldaten abgelegt bzw. gespeichert sind. Hierfür kann es vorteilhaft sein, dass die externe Station eine Einlesevorrichtung zum Einlesen der biometrischen Solldaten aufweist. Wie bei der Erkennungsvorrichtung zum Einlesen der biometrischen Istdaten sind die entsprechenden Gerätschaften, Apparaturen, wie beispielsweise Kamera, etc. denkbar, damit die Einlesevorrichtung der externen Station zuverlässig die biometrischen Solldaten erfassen kann. In einer möglichen Ausführungsform der Erfindung ist es denkbar, dass zunächst der Fahrer sich in die externe Station begibt, in der seine Solldaten, insbesondere biometrischen Soldaten, über die Einlesevorrichtung erfasst werden. Diese Solldaten werden dann in der Datenbank gespeichert. Die Überprüfungsvorrichtung der externen Station greift während der Authentifizierung auf diese Datenbank zu, um die empfangenen Istdaten des Fahrers mit den Solldaten zu vergleichen bzw. auf Übereinstimmung zu prüfen. Handelt es sich beispielsweise bei der externen Station um eine Autovermietungsagentur kann der Fahrer, nachdem die Solldaten in der externen Station erfasst worden sind, anschließend zum Kraftfahrzeug gehen. Wenn der Fahrer nun das Auto entriegelt hat, die Tür geöffnet hat und anschließend sich auf den Fahrersitz gesetzt hat, kann die Authentifizierung nach dem beschriebenen erfindungsgemäßen Verfahren starten. Das bedeutet, dass die ermittelten Istdaten zunächst durch die im Kraftfahrzeug angeordnete Erkennungsvorrichtung erfasst werden, anschließend zur externen Station gesendet werden, die eine entsprechende Überprüfung durchführt, inwieweit die Istdaten mit den Solldaten entsprechen. Bei einer Übereinstimmung der Daten erhält das Kraftfahrzeug von der externen Station ein entsprechendes Freigabesignal, sodass das Kraftfahrzeug vom Fahrer gestartet werden kann.

Vorteilhafterweise ist die externe Station das Internet. Somit ist es denkbar, dass die Überprüfungsvorrichtung dezentral angeordnet werden kann, um sämtliche Kraftfahrzeuge zu sichern bzw. mit sämtlichen Fahrern von unterschiedlichen Kraftfahrzeugen einen Authentifizierungsvorgang durchzuführen. Hierbei kann es vorteilhaft sein, dass es eine Vielzahl an Einlesevorrichtungen gibt, die Solldaten erfassen können, die wiederum über entsprechende Kommunikationsmittel, beispielsweise über Funk und/oder mittels des Internets zur externen Station, insbesondere zur Überprüfungsvorrichtung übermittelt werden. Die zentrale Überprüfungsvorrichtung kann einen Vergleich der vom Kraftfahrzeug erhaltenden Istdaten mit den jeweiligen Solldaten durchführen.

Um eine verbesserte Sicherheit zu schaffen, kann die Erkennungsvorrichtung derart innerhalb des Kraftfahrzeuges angeordnet sein, dass lediglich eine Erfassung von Istdaten vom Fahrersitz des Kraftfahrzeuges möglich ist. Somit wird vermieden, dass ein Einlesen der Istdaten von einer anderen Position innerhalb des Kraftfahrzeuges erfolgt. Ein Zweck dieser Ausführungsform ist, dass wirkungsvoll verhindert werden kann, dass ein nicht berechtigter Fahrer das Kraftfahrzeug starten kann, wobei gleichzeitig der eigentlich berechtigte Fahrer sich im Kraftfahrzeug befindet und die "richtigen" Istdaten über die Erkennungsvorrichtung einlesen lässt. Beispielsweise ist es denkbar, dass in der Nähe des Kraftfahrzeuglenkrades und/oder an der Armatur in der Nähe des Kraftfahrzeuglenkrades oder an einer definierten Position des Fahrersitzes, die für den Beifahrer nicht ohne weiteres zugänglich ist, die Erkennungsvorrichtung angeordnet ist.

In einer möglichen Ausführungsform der Erfindung kann die Erkennungsvorrichtung fest im Kraftfahrzeug angeordnet sein, wobei die Erkennungsvorrichtung eine Funktion einer Kommunikationsvorrichtung mit übernehmen kann, beispielsweise, dass z. B. gleichzeitig mit der Erkennungsvorrichtung "telefoniert" werden kann Die Erkennungsvorrichtung kann ein Kommunikationsmodul mit einem Mobilfunkmodul zum Aufbau einer Kommunikationsverbindung über ein Mobilfunknetz umfassen. Ferner kann diese Kommunikationsverbindung auch für die oben genannte Authentifizierung eingesetzt werden, dass bedeutet, dass über die Kommunikationsverbindung die Authentifizierungsabfrage zwischen der externen Station und dem Kraftfahrzeug durchführbar ist.

Ebenfalls ist es denkbar, dass sich die Erkennungsvorrichtung mobil im Kraftfahrzeug befindet. Hierbei kann es vorgesehen sein, dass die Erkennungsvorrichtung eine Telefonvorrichtung, insbesondere ein Mobiltelefon ist, welches mit einem eigenen Kommunikationsmittel mit der Überprüfungsvorrichtung kommunizieren kann.

In einer weiteren Ausführung der Erfindung können sich die Istdaten über eine Kreditkarte, EC-Karte, einen Reisepass, Personalausweis oder über einen Führerschein des Fahrers zusammensetzen. Insbesondere ist es denkbar, dass die Erkennungsvorrichtung definierte Bereiche des Personalausweises einliest und diese Istdaten anschließend der Überprüfungsvorrichtung übermittelt.

Weitere Vorteile, Merkmale und Einzelheiten der Erfindung ergeben sich aus der nachfolgenden Beschreibung, in der unter Bezugnahme auf die Zeichnungen mehrere mögliche Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine rein schematische Ansicht eines erfindungsgemäßen Systems zur Authentifizierung eines Fahrers in einem Kraftfahrzeug mit einer externen Station, die in Signalverbindung mit einer Erkennungsvorrichtung des Kraftfahrzeuges steht,
- Fig. 2: ein weiteres Ausführungsbeispiel einer Erkennungsvorrichtung gemäß Figur 1,
- Fig. 3: ein weiteres Ausführungsbeispiel einer Überprüfungsvorrichtung, die in einer externen Station gemäß Figur 1 einsetzbar ist,
- Fig. 4: ein weiteres Ausführungsbeispiel einer Überprüfungsvorrichtung,
- Fig. 5: ein noch weiteres Ausführungsbeispiel eines Systems zur Authentifizierung eines Fahrers in einem Kraftfahrzeug,
- Fig. 6: ein weiteres Ausführungsbeispiel des erfindungsgemäßen Systems und
- Fig. 7: eine weitere Alternative des genannten Systems zur Authentifizierung eines Fahrers in einem Kraftfahrzeug.

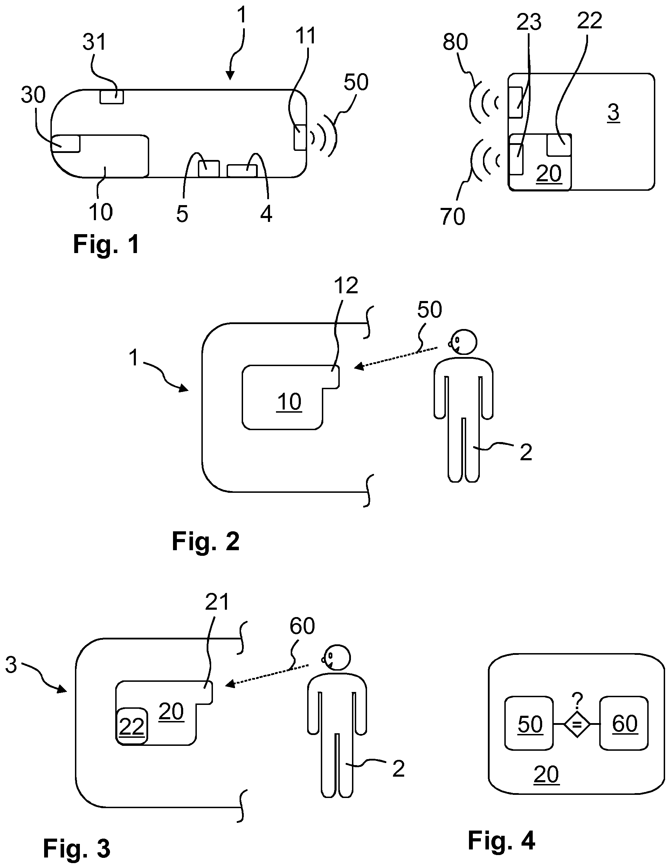

In Figur 1 ist schematisch ein Kraftfahrzeug 1 gezeigt, in dem ein nicht explizit dargestellter Fahrer sich befinden kann. Nachdem der Fahrer innerhalb des Kraftfahrzeuges 1 sich befindet, kann über eine Erkennungsvorrichtung 10 eine Erfassung von Istdaten 50 des Fahrers erfolgen. Wenn die Istdaten 50 erfasst worden sind, erfolgt über ein innerhalb des Kraftfahrzeuges 1 angeordnetes Kommunikationsmittel 11 eine Übertragung dieser Istdaten 50 zu einer beabstandeten externen Station 3. In dieser externen Station 3 werden diese Istdaten 50 durch ein Kommunikationsmittel 23 erfasst. Zudem weist die externe Station 3 eine Überprüfungsvorrichtung 20 auf, die die empfangenen Istdaten 50 durch das Kommunikationsmittel 23 mit Solldaten 60 vergleichen kann, welches schematisch in Figur 4 gezeigt ist.

Die Solldaten 60 wurden zuvor, d. h. vor der Authentifizierung über eine Einlesevorrichtung 21 eingelesen, wobei die Einlesevorrichtung 21 Daten vom Fahrer 2 ermittelt hat. In den vorliegenden Ausführungsbeispielen stellen die Solldaten 60 und Istdaten 50 des Fahrers 2 biometrische Istdaten 50 sowie biometrische Solldaten 60 dar.

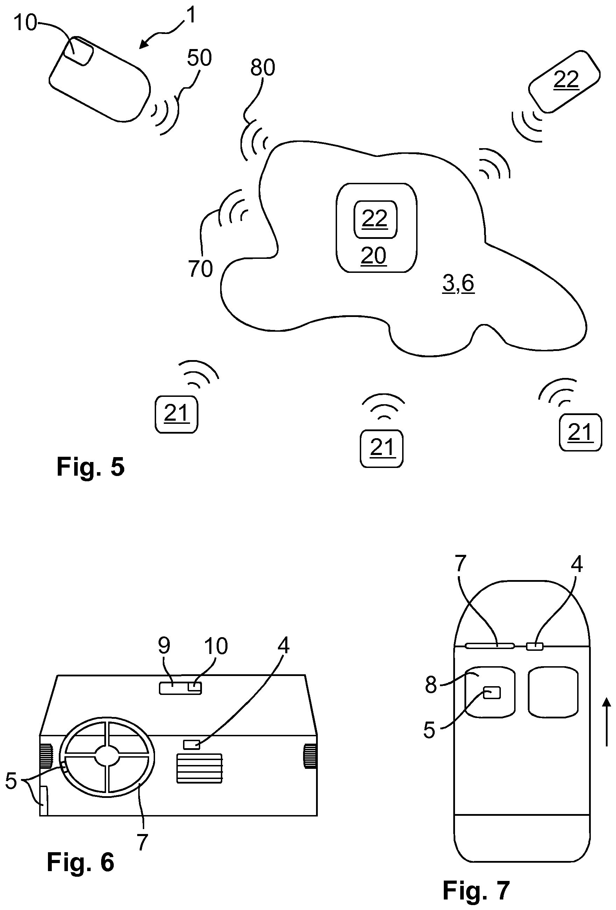

Beispielsweise ist es denkbar, dass der Fahrer 2 innerhalb der externen Station 3 sich aufgehalten hat, in der die Einlesevorrichtung 21 die entsprechenden biometrischen Solldaten 30 erfasst hat. Ebenfalls ist es denkbar, dass die Einlesevorrichtung 21 getrennt von der externen Station 3 angeordnet ist, wie es in Figur 5 gezeigt ist. Nachdem die biometrischen Solldaten 60 durch die Einlesevorrichtung 21 erfasst worden sind, ist es denkbar, dass diese biometrischen Solldaten 60 zu der der Einlesevorrichtung 21 entfernten externen Station 3 gesendet werden. Innerhalb der externen Station 3 befindet sich die Überprüfungsvorrichtung 20, die eine entsprechende Überprüfung bzw. einen Vergleich der Istdaten 50 mit den Solldaten 60 vornimmt. Liegt eine Übereinstimmung der Daten vor, sendet gemäß Figur 1 und Figur 5 die externe Station 3 ein Freigabesignal 70 zum Kraftfahrzeug 1. Das Freigabesignal 70, welches durch ein Kommunikationsmittel 11 des Kraftfahrzeuges 1 empfangen werden kann, ermöglicht, dass über eine definierte Aktion des Fahrers der Startvorgang des Kraftfahrzeuges 1 ausgelöst werden kann. Die definierte Aktion des Fahrers kann z. B. sein, dass der Fahrer innerhalb des Kraftfahrzeuges 1 den Zündschalter betätigt und/oder einen Start-/Stopp-Schalter 4 betätigt. Vorteilhafterweise triggert diese bewusste Aktivierung des Fahrers den Start dieses soeben beschriebenen Authentifizierungsvorganges sowie bei einer positiven Authentifizierung den Startvorgang des Kraftfahrzeuges 1.

Gemäß Figur 1, Figur 3 und Figur 5 kann ein Speicher 22 bzw. eine Datenbank vorgesehen sein, die die biometrischen Solldaten 60 speichern kann. Dieser Speicher/Datenbank 22 kann z. B. in der Überprüfungsvorrichtung 20 integriert sein. Ebenfalls ist es denkbar, dass die Überprüfungsvorrichtung 20 mit einer externen Datenbank bzw. mit einem externen Speicher 22 zu kommunizieren hat, um die Solldaten 60 für die Überprüfung mit den Istdaten 50 zu erhalten. Diese Alternative ist ebenfalls in Figur 5 gezeigt.

Die Versendung der Istdaten 50, der Solldaten 60 sowie des Freigabesignals 70 kann verschlüsselt erfolgen. Die Erkennungsvorrichtung 10 sowie die Einlesevorrichtung 21 können beispielsweise ein optisches oder ein akustisches Erkennungselement aufweisen, um biometrische Charakteristika des Fahrers 2 zu erfassen bzw. zu erkennen.

Beispielsweise ist es denkbar, dass eine Kamera 12 vorgesehen ist, um definierte biometrische Größen oder Informationen des Fahrers 2 zu ermitteln, welches schematisch in Figur 2 gezeigt ist.

Auch in Figur 2 kann in der Erkennungsvorrichtung 10 ein nicht explizit dargestellter Speicher vorgesehen sein, der kurzzeitig die Istdaten 50 speichert, die anschließend zur externen Station 3 übermittelt werden.

Solange keine Übereinstimmung der zu vergleichenden Daten 50, 60 vorliegt, befindet sich das Kraftfahrzeug 1 gemäß Figur 1 und Figur 5 in einem Sicherungsmodus, bei dem das Starten des Kraftfahrzeuges 1 gesperrt ist. Das bedeutet, dass z. B. die Zündungssteuerung des Kraftfahrzeuges 1 deaktiviert ist. Erst bei einer Übereinstimmung der zu vergleichenden Daten 50, 60 erfolgt ein Wechsel des Kraftfahrzeuges 1 in einen Startmodus, sodass der Kraftfahrzeugmotor gestartet werden kann.

In Figur 1 ist gezeigt, dass eine Steuerung 30 in der Erkennungsvorrichtung 10 vorgesehen sein kann, die ausgehend von einer definierten Aktion des Fahrers 2 die oben bereits beschriebene Authentifizierung starten kann. Nach Erhalt des Freigabesignals 70 kann die Steuerung 30 z. B. der Motorsteuerung 31 des Kraftfahrzeuges 1 ein entsprechendes Signal senden, dass das Kraftfahrzeug 1 aus dem Sicherungsmodus in den Startmodus gewechselt werden kann. Ebenfalls ist es denkbar, dass die Motorsteuerung 31 komplett die Funktion der Steuerung 30 übernimmt, sodass auf die Steuerung 30 der Erkennungsvorrichtung 10 verzichtet werden kann.

Gemäß Figur 1 ist gezeigt, dass über die Betätigung des Zündschalters 4 der Vorgang der Authentifizierung gestartet werden kann. Gemäß Figur 6 und Figur 7 kann vorgesehen sein, dass zum Starten der Authentifizierung eine zweite definierte Aktion des Fahrers 2 vorliegen muss, um eine Authentifizierung der oben genannten Art zu starten. Gemäß Figur 1 und 6 ist es beispielsweise denkbar, dass der Fahrer 2 neben der Aktivierung des Zündschalters 4, der alternativ auch ein Start-/Stopp-Schalter sein kann, das Lenkrad 7 berühren muss. Innerhalb des Lenkrades 7 ist ein Sensor 5 vorgesehen, der diese zweite definierte zweite Aktion des Fahrers 2 erkennt. Erst wenn beide Aktionen des Fahrers ausgeführt werden, startet der Authentifizierungsvorgang. Die Erkennungsvorrichtung 10 kann z. B. im Rückspiegel 9 integriert sein, die die Istdaten 50 des Fahrers 2 erfasst. Damit Manipulationen möglichst ausgeschlossen sind, kann der Sensor 5 seitlich des Lenkrades 7 angeordnet sein, damit der Beifahrer diesen Sensor 5 nicht betätigen kann.

Figur 7 zeigt eine weitere Variante, bei der der Sensor 5 im Fahrersitz 8 integriert ist. Erst wenn der Zündschalter 4 sowie der Sensor 5 den Fahrer detektieren, startet der Authentifizierungsvorgang. Die Istdaten 50 gemäß Figur 7 können beispielsweise wie in Figur 6 über die Erkennungsvorrichtung 10 ermittelt werden, die im Rückspiegel 9 integriert ist. Selbstverständlich sind alternative Technologien, wie bereits oben beschrieben, ebenfalls denkbar, um biometrische Istdaten 50 des Fahrers 2 zu erfassen.

Gemäß Figur 1 und Figur 5 ist es denkbar, dass die Erkennungsvorrichtung 10 innerhalb des Kraftfahrzeuges 1 so lange deaktiviert bleibt, bis ein entsprechendes Wecksignal 80 von der externen Station 3 in Richtung Kraftfahrzeug 1 gesendet wird. Dieses vom Kraftfahrzeug 1 empfangene Wecksignal 80 bewirkt, dass die Erkennungsvorrichtung 10 aus ihrem deaktivierten Zustand in einen aktiven Zustand gebracht wird, damit die Erkennungsvorrichtung 10 über eine bzw. über mehrere definierte Aktionen des Fahrers 2 angesprochen werden kann, um biometrische Istdaten 50 des Fahrers 2 zu erfassen. Gemäß Figur 5 ist es zudem möglich, dass die externe Station 3 innerhalb des Internets 6 integriert ist, sodass die Daten 50, 60, 70, 80 innerhalb des Internets 6 oder zumindest teilweise innerhalb des Internets 6 sowie über Funk übertragen werden können. Die Datenbank bzw. der Speicher 22 kann sich auf einem Server, gekoppelt mit dem Internet 6, befinden.

Das Kommunikationsmittel 23 der externen Station 3 kann sich auch in der Überprüfungsvorrichtung 20 oder in der Einlesevorrichtung 21 befinden. Hierbei ist es denkbar, dass die Einlesevorrichtung 21 in der Überprüfungsvorrichtung 20 integriert ist, welches beispielsweise in Figur 3 gezeigt ist. In Figur 5 sind allerdings die Einlesevorrichtungen 21 separiert von der Überprüfungsvorrichtung 20.

Vorteilhafterweise erfolgt die Authentifizierung einmalig vor jedem gewöhnlichen Startvorgang des Kraftfahrzeuges 1. Ebenfalls kann es vorgesehen sein, dass gemäß sämtlicher Figuren in regelmäßigen Abständen bzw. unregelmäßigen Abständen während der Fahrt automatisch eine Authentifizierung gemäß den beschriebenen Ausführungen durchgeführt wird. Falls überraschender Weise eine positive Authentifizierung nicht durch die Überprüfungsvorrichtung der externen Station 3 bestätigt wird, kann ein Signal beispielsweise ausgelöst werden, das weitere Personen hierüber informiert. Ebenfalls ist es denkbar, dass ein entsprechendes Signal von der externen Station 3 zum Kraftfahrzeug 1, insbesondere zur Steuerung 30 bzw. zur Motorsteuerung 31 gesendet wird. Beispielsweise ist es denkbar, dass hierdurch die Steuerung 30, 31 den Fahrer 2 über ein akustisches oder visuelles Signal informiert, dass keine positive Authentifizierung vorliegt. Ebenfalls kann die Erfindung mit umfassen, dass der Fahrer 2 über die Motorsteuerung 31 gezwungen wird, das Kraftfahrzeug 1 zu stoppen bzw. die Steuerung 30 bzw. die Motorsteuerung 31 eine Abschaltung des Kraftfahrzeugmotors veranlasst. Bei der letztgenannten Ausführungsvariante kann es Sinn machen, dass vor einer Abschaltung des Kraftfahrzeugmotors, der Fahrer 2 hierüber informiert wird, und zwar, dass eine Abschaltung in Kürze durch die Motorsteuerung 31 bzw. durch die Steuerung 30 erfolgen wird, sodass dem Fahrer 2 noch genügend Zeit verbleibt die Fahrzeuggeschwindigkeit zu reduzieren und selbstständig das Kraftfahrzeug 1 zu parken und den Motor abzuschalten.

In einer möglichen Ausführungsform der Erfindung ist es ebenfalls denkbar, dass sich die Erkennungsvorrichtung 10 mobil im Kraftfahrzeug 1 befindet. Hierbei kann es vorgesehen sein, dass die Erkennungsvorrichtung 10 ein Mobiltelefon ist, welches mit einem eigenen Kommunikationsmittel mit der Überprüfungsvorrichtung 20 kommunizieren kann.

In einer weiteren Ausführung der Erfindung können sich die Istdaten 50 über eine Kreditkarte, EC-Karte, einen Reisepass, Personalausweis oder über einen Führerschein des Fahrers zusammensetzen. Insbesondere ist es denkbar, dass die Erkennungsvorrichtung 10 definierte Bereiche des Personalausweises einliest und diese Istdaten 50 anschließend der Überprüfungsvorrichtung 20 übermittelt.

Beispielsweise kann gemäß Figur 1 bzw. Figur 2 die Erkennungsvorrichtung 10 als ein Mobiltelefon ausgebildet sein, welches beweglich und mobil im Kraftfahrzeug 1 angeordnet ist. Über eine am Mobiltelefon 10 angeordnete Kamera 12 können z. B biometrische Daten vom Benutzer 2 erfasst werden. Das Mobiltelefon 10 kann ein eigenes Kommunikationsmittel aufweisen, das dem Kommunikationsmittel 11 aus Figur 1 entspricht, um Istdaten 50 zur externen Station 3 zu übermitteln. Sämtliche Ausführungen zu den Figuren 1 bis 7 sind auch auf ein Mobiltelefon 10 als Erkennungsvorrichtung anwendbar.

### Bezugszeichenliste

- 1: Kraftfahrzeug
- 2: Fahrer
- 3: externe Station
- 4: Zündschalter
- 5: Sensor
- 6: Internet
- 7: Lenkrad
- 8: Sitz
- 9: Rückspiegel

- 10: Erkennungsvorrichtung
- 11: Kommunikationsmittel
- 12: Kamera

- 20: Überprüfungsvorrichtung
- 21: Einlesevorrichtung
- 22: Speicher/Datenbank
- 23: Kommunikationsmittel

- 30: Steuerung
- 31: Motorsteuerung

- 50: Istdaten

- 60: Solldaten

- 70: Freigabesignal

- 80: Wecksignal

## Patentansprüche

1. Verfahren zur Authentifizierung eines Fahrers (2) in einem Kraftfahrzeug (1), mit einer im Kraftfahrzeug (1) angeordneten Erkennungsvorrichtung (10) zur Erfassung von Istdaten (50) des Fahrers (2), die während der Authentifizierung zu einer Überprüfungsvorrichtung (20), die in einer externen Station (3) außerhalb des Kraftfahrzeuges (1) angeordnet ist, gesendet werden, wobei
die Überprüfungsvorrichtung (20) die Istdaten (50) mit Solldaten (60) vergleicht und bei einer Übereinstimmung der Istdaten (50) mit den Solldaten (60) ein Freigabesignal (70) von der externen Station (3) zum Kraftfahrzeug (1) gesendet wird, wodurch ein Startvorgang des Kraftfahrzeuges (1) für den Fahrer (2) ermöglicht wird, wobei die Erkennungsvorrichtung (10) ein Kommunikationsmodul zum Aufbau einer Kommunikationsverbindung über ein Mobilfunknetz umfasst, wobei die Erkennungsvorrichtung (10) mobil ist,
wobei die Solldaten (60) vor der Authentifizierung in die externe Station (3) eingelesen werden, und eine Einlesevorrichtung (21) vorgesehen ist, die außerhalb des Kraftfahrzeuges (1) Solldaten (60) des Fahrers (2) erfasst, die in der externen Station (3) gespeichert werden.

2. Verfahren nach Anspruch 1,
**dadurch gekennzeichnet,**
**dass** so lange keine Übereinstimmung der Daten vorliegt, das Kraftfahrzeug (1) sich in einem Sicherungsmodus befindet, in dem ein Starten des Kraftfahrzeuges (1) gesperrt ist, wobei bei einer Übereinstimmung der Daten das Kraftfahrzeug (1) sich in einem Startmodus befindet.

3. Verfahren nach einem der vorhergehenden Ansprüche,
**dadurch gekennzeichnet,**
**dass** eine Steuerung (30) vorgesehen ist, die ausgehend von zumindest einer definierten Aktion des Fahrers (2) die Authentifizierung startet, insbesondere dass bei einer bewussten Aktivierung eines innerhalb des Kraftfahrzeuges (1) angeordneten Zündschalters (4) die Authentifizierung startet.

4. Verfahren nach einem der vorhergehenden Ansprüche,
**dadurch gekennzeichnet,**
**dass** die Istdaten (50) biometrische Istdaten sind.

5. Verfahren nach einem der vorhergehenden Ansprüche,
**dadurch gekennzeichnet,**
**dass** die Erkennungsvorrichtung (10) bei der Authentifizierung biologische Informationen des Fahrers (2) als Istdaten (50) erfasst, wobei die Istdaten (50) zumindest eine Charakteristika der folgenden biologischen Informationen umfassen:
Körpergröße, Iris, Retina, Gesichtsgeometrie, Fingerabdruck, Handlinienstruktur, Handvenenstruktur, Handgeometrie, Nagelbettmuster, Ohrform, Stimme, Unterschrift, Bewegungsmusterverhalten für zumindest eine definierte Bewegung des Fahrers, Lippenbewegung.

6. Verfahren nach einem der vorhergehenden Ansprüche,
**dadurch gekennzeichnet,**
**dass** erst eine Authentifizierung startet, wenn eine zweite definierte Aktion des Fahrers (2) vorliegt, insbesondere die zweite definierte Aktion durch einen kraftfahrzeugseitigen Sensor (5) erkannt wird.

7. Verfahren nach Anspruch 6,
**dadurch gekennzeichnet,**
**dass** der Sensor (5) ein Sitzsensor oder einen Türsensor oder ein Pedalsensor oder ein Ganghebelsensor oder ein Sensor zur Erkennung eines mobilen Identifikationsgebers, den der Benutzer bei sich trägt, ist.

8. Verfahren nach einem der vorhergehenden Ansprüche,
**dadurch gekennzeichnet,**
**dass** die Erkennungsvorrichtung (10) eine Kamera (12) zur Erfassung der Istdaten (50) aufweist.

9. System zur Authentifizierung eines Fahrers (2) in einem Kraftfahrzeug (1), mit einer im Kraftfahrzeug (1) angeordneten Erkennungsvorrichtung (10) zur Erfassung von Istdaten (50) des Fahrers (2), die während der Authentifizierung zu einer Überprüfungsvorrichtung (20), die in einer externen Station (3) außerhalb des Kraftfahrzeuges (1) angeordnet ist, gesendet werden, wobei
die Überprüfungsvorrichtung (20) die Istdaten (50) mit Solldaten (60) vergleicht und bei einer Übereinstimmung der Istdaten (50) mit den Solldaten (60) ein Freigabesignal (70) von der externen Station (3) zum Kraftfahrzeug (1) gesendet wird, wodurch ein Startvorgang des Kraftfahrzeuges (1) für den Fahrer (2) ermöglicht wird, wobei die Erkennungsvorrichtung (10) ein Kommunikationsmodul zum Aufbau einer Kommunikationsverbindung über ein Mobilfunknetz umfasst, wobei die Erkennungsvorrichtung (10) mobil ist, **dadurch gekennzeichnet, dass** eine Einlesevorrichtung (21) außerhalb des Kraftfahrzeuges vorgesehen ist, um die Solldaten (60) des Fahrers zu erfassen, die vor der Authentifizierung in die externe Station eingelesen werden.

10. System nach Anspruch 9,
**dadurch gekennzeichnet,**
**dass** die externe Station (3) ein Kommunikationsmittel (23) aufweist, um Istdaten (50) sowie ein Freigabesignal (70) zu empfangen und/oder zu versenden.

11. System nach Anspruch 9 bis 10,
**dadurch gekennzeichnet,**
**dass** eine Steuerung (30) in der Erkennungsvorrichtung (10) integriert ist, wobei die Steuerung (30) mit einer Motorsteuerung (31) in Signalverbindung bringbar ist.

12. System nach Anspruch 9 bis 11,
**dadurch gekennzeichnet,**
**dass** die externe Station (3) das Internet (14) ist.

13. System nach Anspruch 9 bis 12,
**dadurch gekennzeichnet,**
**dass** die Erkennungsvorrichtung (10) derart innerhalb des Kraftfahrzeuges (1) angeordnet ist, dass lediglich eine Erfassung von Istdaten (50) vom Fahrersitz des Kraftfahrzeuges (1) möglich ist.

14. System nach Anspruch 9 bis 13,
**dadurch gekennzeichnet,**
**dass** die Erkennungsvorrichtung (10) aus dem Kraftfahrzeug (1) herausnehmbar ist.

## Claims

1. Method for authenticating a driver (2) in a motor vehicle (1), having a recognition device (10) arranged in the motor vehicle (1) for detecting actual data (50) of the driver (2) which are sent during authentication to a checking device (20) which is arranged in an external station (3) outside the motor vehicle (1), wherein
the checking device (20) compares the actual data (50) with desired data (60) and, if the actual data (50) corresponds to the desired data (60), a release signal (70) is transmitted from the external station (3) to the motor vehicle (1), as a result of which a starting operation of the motor vehicle (1) is made possible for the driver (2),
the recognition device (10) comprising a communication module for establishing a communication link via a mobile radio network, the recognition device (10) being mobile, the desired data (60) being read into the external station (3) before authentication, and a read-in device (21) being provided which detects desired data (60) of the driver (2) outside the motor vehicle (1) and which are stored in the external station (3).

2. Method according to claim 1,
**characterized in that**
the motor vehicle (1) is in a safety mode in which starting of the motor vehicle (1) is disabled as long as there is no correspondence of the data, wherein
if the data match, the motor vehicle (1) is in a starting mode.

3. Method according to any one of the preceding claims,
**characterized in that**
a controller (30) is provided which starts authentication starting from at least one defined action of the driver (2), in particular
**in that** authentication starts when an ignition switch (4) arranged inside the motor vehicle (1) is deliberately activated.

4. Method according to any one of the preceding claims,
**Characterized in that**
the actual data (50) are biometric actual data.

5. Method according to any one of the preceding claims,
**Characterized in that**
during authentication, the recognition device (10) detects biological information of the driver (2) as actual data (50), wherein
the actual data (50) includes at least one characteristic of the following biological information:
body size, iris, retina, face geometry, fingerprint, palm line structure, hand vein structure, hand geometry, nail bed pattern, ear shape, voice, signature, movement pattern behavior for at least one defined movement of the driver, lip movement.

6. Method according to any one of the preceding claims,
**characterized in that**
authentication only starts when a second defined action of the driver (2) is present, in particular
the second defined action is detected by a sensor (5) on the vehicle side.

7. Method according to claim 6,
**characterized in that**
the sensor (5) is a seat sensor or a door sensor or a pedal sensor or a gear fever sensor or a sensor for detecting a mobile identification transmitter which the user carries with him.

8. Method according to any one of the preceding claims,
**characterized in that**
the recognition device (10) has a camera (12) for recording the actual data (50).

9. System for authenticating a driver (2) in a motor vehicle (1), having
a recognition device (10) arranged in the motor vehicle (1) for detecting actual data (50) of the driver (2) which are sent during authentication to a checking device (20) which is arranged in an external station (3) outside the motor vehicle (1), wherein
the checking device (20) compares the actual data (50) with desired data (60) and, if the actual data (50) corresponds to the desired data (60), a release signal (70) is transmitted from the external station (3) to the motor vehicle (1), as a result of which a starting operation of the motor vehicle (1) is made possible for the driver (2),
the recognition device (10) comprising a communication module for establishing a communication link via a mobile radio network, the recognition device (10) being mobile, **characterized in that**
a read-in device (21) is provided outside the motor vehicle in order to detect the desired data (60) of the driver, which are read into the external station before authentication.

10. System according to claim 9,
**characterized in that**
the external station (3) has a communication means (23) for receiving and/or transmitting actual data (50) and an release signal (70).

11. System according to any one of the claims 9 to 10,
**characterized in that**
a controller (30) is integrated in the recognition device (10), it being possible for the controller (30) to be brought into signal connection with a motor control (31).

12. System according to any one of the claims 9 to 11,
**characterized in that**
the external station (3) is the Internet (14).

13. System according to any one of the claims 9 to 12,
**characterized in that**
the recognition device (10) is arranged inside the motor vehicle (1) in such a way that only actual data (50) can be recorded from the driver's seat of the motor vehicle (1).

14. System according to any one of the claims 9 to 13,
**characterized in that**
the recognition device (10) can be removed from the motor vehicle (1).

## Revendications

1. Procédé d'authentification d'un conducteur (2) dans un véhicule automobile (1), comportant
un dispositif de reconnaissance (10) disposé dans le véhicule automobile (1) pour détecter des données réelles (50) du conducteur (2) qui sont envoyées pendant l'authentification à un dispositif de contrôle (20) qui est disposé dans une station externe (3) à l'extérieur du véhicule automobile (1), où
le dispositif de contrôle (20) compare les données réelles (50) aux données souhaitées (60) et, si les données réelles (50) correspondent aux données souhaitées (60), un signal de déclenchement (70) est transmis de la station externe (3) au véhicule automobile (1), ce qui permet au conducteur (2) une opération de démarrage du véhicule automobile (1),
le dispositif de reconnaissance (10) comprenant un module de communication pour établir une liaison de communication via un réseau radio mobile, le dispositif de reconnaissance (10) étant mobile,
les données souhaitées (60) étant lues dans la station externe (3) avant authentification, et un dispositif de lecture (21) étant prévu qui détecte les données souhaitées (60) du conducteur (2) à l'extérieur du véhicule automobile (1) et qui sont enregistrées dans la station externe (3).

2. Procédé selon la revendication 1,
**caractérise en ce**
**que** le véhicule automobile (1) se trouve dans un mode sécurisé dans lequel le démarrage du véhicule automobile (1) est désactivé tant qu'il n'y a pas correspondance des données, où
si les données correspondent, le véhicule automobile (1) est en mode de démarrage.

3. Procédé selon l'une quelconque des revendications précédentes,
**caractérise en ce**
**qu'**il est prévu un commande (30) qui démarre l'authentification à partir d'au moins une action définie du conducteur (2), en particulier
**en ce que** l'authentification commence lorsqu'un commutateur d'allumage (4) disposé à l'intérieur du véhicule automobile (1) est volontairement activé.

4. Procédé selon l'une quelconque des revendications précédentes,
**caractérise en ce**
**que** les données réelles (50) sont des données réelles biométriques.

5. Procédé selon l'une quelconque des revendications précédentes,
**caractérise en ce**
**que**, pendant l'authentification, le dispositif de reconnaissance (10) détecte des informations biologiques du conducteur (2) en tant que données réelles (50), dans lequel les données réelles (50) comprennent au moins une caractéristique des informations biologiques suivantes :
taille du corps, iris, rétine, géométrie du visage, empreinte digitale, structure de la ligne de paume, structure de la veine de la main, géométrie de la main, motif du lit de l'ongle, forme de l'oreille, voix, signature, comportement du motif du mouvement pour au moins un mouvement défini du conducteur, mouvement des lèvres.

6. Procédé selon l'une quelconque des revendications précédentes,
**caractérise en ce**
**que** l'authentification ne démarre que lorsqu'une seconde action définie du conducteur (2) est présente, en particulier
la deuxième action définie est détectée par un capteur (5) côté véhicule.

7. Procédé selon la revendication 6,
**caractérise en ce**
**que** le capteur (5) est un capteur de siège ou un capteur de porte ou un capteur de pédale ou un capteur de levier de vitesses ou un capteur pour détecter un émetteur mobile d'identification que l'utilisateur transporte avec lui.

8. Procédé selon l'une quelconque des revendications précédentes,
**caractérise en ce**
**que** le dispositif de reconnaissance (10) comporte une caméra (12) pour enregistrer les données réelles (50).

9. Système d'authentification d'un conducteur (2) dans un véhicule automobile (1), comportant
un dispositif de reconnaissance (10) disposé dans le véhicule automobile (1) pour détecter des données réelles (50) du conducteur (2) qui sont envoyées pendant l'authentification à un dispositif de contrôle (20) qui est disposé dans une station externe (3) à l'extérieur du véhicule automobile (1), où
le dispositif de contrôle (20) compare les données réelles (50) aux données souhaitées (60) et, si les données réelles (50) correspondent aux données souhaitées (60), un signal de déclenchement (70) est transmis de la station externe (3) au véhicule automobile (1), ce qui permet au conducteur (2) une opération de démarrage du véhicule automobile (1)
le dispositif de reconnaissance (10) comprend un module de communication pour établir une liaison de communication via un réseau radio mobile, dans lequel le dispositif de reconnaissance (10) est mobile,
**caractérise en ce**
**qu'**un dispositif de lecture (21) est prévu à l'extérieur du véhicule automobile afin de détecter les données souhaitées (60) du conducteur, qui sont lues dans la station externe avant authentification.

10. Système selon la revendication 9,
**caractérise en ce**
**que** la station externe (3) présente un moyen de communication (23) pour recevoir et/ou transmettre des données réelles (50) et un signal de déclenchement (70).

11. Système selon l'une quelconque des revendications 9 à 10,
**caractérise en ce**
**qu'**une commande (30) est intégré dans le dispositif de reconnaissance (10), la commande (30) pouvant être mis en liaison de signal avec un commande de moteur (31).

12. Système selon l'une quelconque des revendications 9 à 11,
**caractérise en ce**
**que** la station externe (3) est l'Internet (14).

13. Système selon l'une quelconque des revendications 9 à 12,
**caractérise en ce**
**que** le dispositif de reconnaissance (10) est disposé à l'intérieur du véhicule automobile (1) de telle sorte que seules des données réelles (50) peuvent être enregistrées depuis le siège conducteur du véhicule automobile (1).

14. Système selon l'une quelconque des revendications 9 à 13,
**caractérise en ce**
**que** le dispositif de reconnaissance (10) peut être retiré du véhicule automobile (1).
